# EUROPÄISCHE PATENTSCHRIFT

(11) **EP 1 095 298 B1**
(45) Veröffentlichungstag und Bekanntmachung des Hinweises auf die Patenterteilung: **18.09.2002**
(21) Anmeldenummer: 99939362.2
(22) Anmeldetag: 17.06.1999
(51) Int. Cl.: G02B 5/30, C03C 4/08, C03C 23/00

(54) **VERFAHREN ZUR HERSTELLUNG VON UV-POLARISATOREN**
METHOD FOR PRODUCING UV POLARIZERS
PROCEDE DE PRODUCTION DE POLARISEURS D'UV

(30) Priorität: 04.07.1998 DE 19829970
(43) Veröffentlichungstag der Anmeldung: 02.05.2001
(73) Patentinhaber: F.O.B. GMBH Gesellschaft zur Fertigung Farbiger Optoelektronischer Bauelemente, 06184 Grobers (DE)
(72) Erfinder: DROST, Wolf-Gernot, D-06124 Halle (DE); BERGER, Andreas, D-06114 Halle (DE)
(74) Vertreter: Voigt, Wolf-Rüdiger
(86) Internationale Anmeldenummer: DE9901783
(87) Internationale Veröffentlichungsnummer: WO00002069

(56) Entgegenhaltungen:
- EP-A- 0 521 591
- EP-A- 0 698 583
- WO-A-98/14409
- US-A- 3 653 863
- US-A- 4 076 544
- US-A- 5 491 117

## Beschreibung

Die Erfindung betrifft ein Verfahren zur Herstellung von UV-Polarisatoren, bei denen die Polarisation durch dichroitische Absorption erfolgt und bei denen in das Trägermaterial in neuartiger Anordnung rotationsellipsoidförmige metallische Partikel eingebaut sind. Als Trägermaterial wird hauptsächlich Standard-Floatglas verwendet. Dabei handelt es sich um Polarisatoren im ultravioletten Spektralbereich mit einem breiten Absorptionsbereich. Bei dem Verfahren wird das dichroitische Verhalten der Metallpartikel beeinflußt, indem spezielle Verfahrensschritte zum Einbringen und zum Bearbeiten submikroskopischer metallischer Partikel im Trägermaterial durchgeführt werden.

Die Erzeugung von linear polarisiertem Licht aus unpolarisiertem oder gering polarisiertem Licht kann auf der Grundlage verschiedener physikalischer Gegebenheiten erfolgen.

Zum Beispiel wird bei der Nutzung der Doppelbrechung zur Erzeugung von linear polarisiertem Licht die Eigenschaft ausgenutzt, daß in optisch anisotropen Medien der einfallende Lichtstrahl, wenn er sich nicht in Richtung der optischen Achse fortpflanzt, in einen ordentlichen und einen außerordentlichen Strahl zerlegt wird, die senkrecht zueinander polarisiert sind. Anwendungsbeispiele sind die seit Jahren bekannten Polarisationsprismen (Nicolsches Prisma, Glan-Thompson-Prisma, Wollaston-Prisma, u.a.). Nachteil dieser Prismen ist ihr massiver und damit auch teurer Aufbau sowie die sehr eingeschränkte nutzbare Fläche und die Notwendigkeit einer exakten Positionierung. Weiterhin ist der Polarisationseffekt stark wellenlängenabhängig.
Bei schräger Reflexion von unpolarisiertem Licht an durchsichtigen isotropen Körpern ist der reflektierte Strahl teilweise polarisiert, wobei vorwiegend die senkrecht zur Einfallsebene schwingende Komponente reflektiert wird. Ist der Einfallswinkel gleich dem Brewster-Winkel, so ist der reflektierte Strahl vollständig linear polarisiert. Anwendung findet dieser Effekt z.B. in polarisierenden Strahlteilern. Die Nachteile sind identisch mit denen der Polarisationsprismen.

Auf der Grundlage der sogenannten Hertzschen Polarisation wird in der DE-OS 28 18 103 ein "Verfahren zur Herstellung von aus einer Vielzahl von auf einer Glasträgerplatte angeordneten parallel zueinander ausgerichteten elektrisch leitenden Streifen bestehenden Polarisatoren" beschrieben. In der EP 0416 157 A1 mit dem Titel "Polarisator" wird ebenfalls auf die Hertzsche Polarisation zurückgegriffen.

Ein wesentlicher Nachteil der Hertzschen Polarisatoren ist, daß die unerwünschte Polarisationskomponente reflektiert wird. Dies ist für viele Anwendungszwecke, insbesondere bei Einsatz in Displays, sehr störend. Während derartige Polarisatoren im infraroten Spektralbereich erfolgreich verwendet werden, konnte ihr Anwendungsfeld auf Grund von Herstellungsschwierigkeiten bei der Erzeugung konstanter Abstände der Metallfilamente noch nicht effektiv auf den sichtbaren oder gar ultravioletten Spektralbereich ausgedehnt werden.

Die Mehrzahl der heutzutage eingesetzten Polarisatoren verwendet die dichroitische Absorption zur Erzeugung eines Polarisationseffektes. Dabei wird ausgenutzt, daß bestimmte Moleküle oder Kristalle eine von der Schwingungsrichtung abhängige Absorption zeigen. Bei genügender Schichtdicke und isotroper Orientierung der Moleküle oder Kristalle tritt nur noch eine linear polarisierte Komponente aus dem Polarisator aus.

Die größte Gruppe, weil sehr preiswert herstellbar, stellen dabei mechanisch gedehnte Kunststoffolien dar, die mit dichroitischen Farbstoffen gefärbt werden. Die Dehnung bewirkt eine orientierte Absorption der Farbstoffmoleküle. Trotz vielfältiger Fortschritte bei der Herstellung dieser Folien (was sich auch in einer entsprechend großen Zahl von Patenten widerspiegelt) konnten die prinzipiellen Nachteile - chemische Unbeständigkeit, Empfindlichkeit gegen ultraviolette Strahlung, geringe mechanische Beständigkeit - nicht beseitigt werden. Im ultravioletten Spektralbereich sind diese Folien in der Regel nicht einsetzbar.

Um diese Nachteile auszugleichen, erscheinen dichroitische Kristalle, insbesondere nichtsphärische Metalipartikel, sehr vielversprechend. Speziell nichtsphärische Silberpartikel in der Größe 5 nm - 50 nm zeigen auf Grund ihrer speziellen Elektronenstruktur im Bereich 350 nm - 1000 nm das gewünschte Verhalten.
Es existieren verschiedene Ansätze, die diesen Effekt ausnutzen.

In US 4.049.338 "Light polarizing material method and apparatus" und US 5. 122.907 "Light polarizer and method of manufacture" wird vorgeschlagen, orientierte rotationsellipsoidförmige Metallpartikel mittels Abscheidung auf einer glatten Glas- oder Kunststoffoberfläche zu erzeugen. Die Exzentrizität der Partikel wird über den Abscheidungsprozeß gesteuert und so eingestellt, daß Maximumslagen der Absorption zwischen 400 nm und 3000 nm erreichbar sind.

Nachteil dieses Verfahrens ist die mechanische Empfindlichkeit der so erzeugten Schichten. Dies kann auch nicht ohne weiteres durch eine Schutzschicht ausgeglichen werden, da diese zur Veränderung der Brechzahl der Partikelumgebung und somit zu Verschiebungen der Maximumslagen führt.

DE 29 27 230 C2 "Verfahren zur Herstellung einer polarisierten Glasfolie, danach hergestellte Glasfolie und Verwendung einer solchen Folie in Flüssigkristallanzeigen" beschreibt ein Verfahren zur Herstellung eines Polarisators für Flüssigkristallanzeigen. Ausgangspunkt ist eine organische oder anorganische Glasschmelze, in welche nadelförmige Körper eingebracht werden. Aus dieser wird eine Glasfolie gezogen. Im Zusammenhang mit der noch zu offenbarenden Erfindung ist hier als nachteilig anzusehen, daß keine dünnen, das heißt keine nur oberflächennahen Schichten realisierbar sind.

Zur Herstellung von Polarisatoren auf der Basis halogenidhaltiger Gläser gibt es vielfältige Vorschläge. Diese Gläser enthalten Metallhalogenidverbindungen (z. B. AgCl, AgBr, u.a.) aus bzw. in denen das Metall ausgeschieden wird. Durch eine mechanische Deformation der Glasmatrix wird diesen Partikeln eine nichtsphärische Form gegeben, die zu einem dichroitischen Verhalten führt.

Die US 3.653.863: "Method of forming photochromic polarizing glasses" beschreibt die Herstellung hochpolarisierender Gläser auf der Basis phasenseparierter oder photochromer (silberhalogenidhaltiger) Gläser, die getempert werden müssen, um Silberhalogenidpartikel der gewünschten Größe zu erzeugen. Anschließend folgen zwei weitere Schritte: Zuerst wird das Glas bei Temperaturen zwischen oberem Kühlpunkt und Glasübergangstemperatur (500°C bis 600°C) verstreckt, extrudiert oder gewalzt, um den Silberhalogenidpartikeln eine ellipsoidförmige Gestalt zu geben und um sie zu orientieren. Wird das Glas einer Strahlung (UV-Strahlung) ausgesetzt, scheidet sich Silbermetall auf der Oberfläche der Silberpartikel ab. Diese Gläser können somit durch Bestrahlung zwischen klar unpolarisiert und eingedunkelt-polarisierend geschaltet werden.

Ein weiteres Verfahren zur Herstellung eines Polarisationsglases durch Silbermetallausscheidung wird in der US 4.304.584: "Method for making polarizing glasses by extrusion" vorgeschlagen. Das Glas wird unterhalb des Kühlpunktes in einer reduzierenden Atmosphäre getempert, um das langgestreckte metallische Silber in einer Oberflächenschicht des Glases von mindestens 10 µm Dicke zu erzeugen. Dieser Prozeß schließt die Erzeugung eines zu einem Verbund zusammengesetzten Glases ein, wobei polarisierende und photochrome Glasschichten kombiniert und laminiert werden.

Aus WO 98/14409 ist ein Polarisator bekannt, bei dem in ein Glas metallische Partikel eingebaut sind, die eine breite Größenverteilung aufweisen. Zur Herstellung dieses Polarisators werden in dem Glas zunächst Präzipitate unterschiedlicher Größe einer entsprechenden Metallverbindung erzeugt. Anschließend wird das Glas mit den Ausscheidungen einem Streckvorgang in einer Richtung unterworfen. Bei diesem Streckvorgang erhalten die Präzipitate zwangsläufig eine längliche, rotationsellipsoidförmige Gestalt; zudem werden sie dabei zwangsläufig parallel zueinander ausgerichtet. Bei einem abschließendem Temperschritt werden die ausgeschiedenen Metallverbindungen reduziert, so daß in der Oberfläche des Glases schließlich rotationsellipsoidförmige metallische Partikel vorliegen. Diese weisen je nach Größe des ursprünglichen Präzipitats hinsichtlich ihrer rotationselliptischen Form unterschiedliche Verformungen auf.

Es soll ferner kurz darauf hingewiesen werden, daß es bekannt ist, siehe hierzu z. B. US 5 122 907 "Light polarizer and method of manufacture", daß die Lage des gewünschten Wellenlängenbereiches derartiger Polarisatoren vom Volumen und vom Achsenverhältnis der rotationsellipsoidförmigen Metallpartikel abhängt.

Um höhere Exzentrizitäten der Metallpartikel zu erzielen, wird in der US 4.486.213: "Drawing laminated polarizing glasses" vorgeschlagen, ein metallhalogenidhaltiges Glas mit einem anderen Glas vor dem Deformationsprozeß zu umgeben.

Ein genereller Nachteil der hier vorgestellten Verfahren und Gläser ist, daß sie alle komplexe und teure Spezialgläser voraussetzen. Es ist (offenbar auf Grund der Komplexität und der Schwierigkeiten, diese Gläser zu handhaben) bis jetzt nicht gelungen, das Anwendungsfeld auf den kurzweiligen sichtbaren oder gar ultravioletten Spektralbereich auszudehnen.

Letztendlich soll noch auf die DE 3150 201 A1 "Verfahren zur Herstellung von polarisiertem Brillenglas" verwiesen werden. Eine Brillenglasscheibe, die als Bestandteil ein Metalloxid, das reduzierbar ist (z. B. Silberoxid) enthält, wird über einen Zeitraum, der ausreicht, um auf mindestens einer Oberfläche der Glasscheibe das Metalloxid bis in eine bestimmte Tiefe zu Metall zu reduzieren, in einer reduzierenden Atmosphäre erhitzt. Nach dieser Reduktion des Metalloxids wird die Glasscheibe auf einer erhöhten Temperatur gehalten, um eine Keimbildung der reduzierten Oxide zu ermöglichen. Darauf wird die Glasscheibe in einer Vorrichtung verstreckt, um eine Dehnung der Metallpartikelkeime in parallelen Linien zu ermöglichen. Nachteil dieser Vorgehensweise ist die Notwendigkeit der Verwendung speziell erschmolzener Gläser.

Der damit realisierbare Silbergehalt im Glas ist auf ca. 0,05 bis 0,5 Gew.-% beschränkt. Weiterhin entstehen nur schmalbandige Extinktionsbanden.

Für den praktischen Einsatz von Polarisatoren im ultravioletten Spektralbereich sind aber breitbandige Extinktionskurven von besonderem Interesse. Als Lichtquellen werden in diesem Bereich vorrangig Halogenlampen eingesetzt, die ein deutliches Linienspektrum zeigen. Um möglichst hohe Lichtintensitäten zu erreichen, ist es wichtig, mehrere dieser Linien zu nutzen. Um Polarisationswirkungen in einem möglichst breiten Wellenlängenbereich zu erreichen, sind breitbandige Polarisatoren erforderlich.

Entsprechend der Aufgabe der Erfindung soll ein Verfahren zur Herstellung von UV-Polarisatoren vorgeschlagen werden, das es gestattet, UV-Polarisatoren mit Polarisationswirkungen in einem möglichst breiten Wellenlängenbereich aus einfachem Ausgangsmaterial kostengünstig herzustellen.

Erfindungsgemäß wird die Aufgabe durch das im Anspruch 1 angegebene Verfahren gelöst. Ausgestaltungen des erfindungsgemäßen Herstellungsverfahrens ergeben sich aus den Patentansprüchen 2 bis 15.

Weitere Hinweise sind zu der erfindungsgemäßen Lösung erforderlich.

Es ist hinlänglich bekannt, daß im Fall einheitlich ausgerichteter rotationsförmiger Partikel deren Absorptionsverhalten deutlich von dem kugelförmiger Partikel abweicht und weiterhin polarisationsrichtungsabhängig ist. Dieses sogenannte dichroitische Verhalten zeigt zum Beispiel bei der Verwendung von rotationsellipsoidförmigen Silberpartikeln mit einem Halbachsenverhältnis von a/b = 2, daß die dichroitische Silberabsorptionsbande sehr schmalbandig ist und somit die Ansprüche gemäß Aufgabenstellung nicht erfüllen kann. Mit dem erfindungsgemäßen Verfahren steht aber eine Möglichkeit zur Verfügung, durch Bildung und Überlagerung von Banden mit unterschiedlichen Maximumslagen einen breiten Absorptionsbereich zu erzeugen.

Es ist gelungen, im Glas Partikel unterschiedlicher Größe zu erzeugen, so daß mindestens zwei Absorptionsbanden mit deutlich unterschiedlichen Maximumslagen entstehen und aus deren Überlagerung eine Verbreiterung des dichroitischen Absorptionsbereiches folgt. Damit steht ein UV-Polarisator zur Verfügung, welcher vor allem im Oberflächenbereich einen neuen Strukturaufbau besitzt.

Prinzipiell kann man Metalle (wie z. B. Silber, Kupfer, Gold) bereits der Glasschmelze zugeben. Der Nachteil dieser Vorgehensweise ist, daß diese dann im gesamten Glasvolumen vorhanden sind und eine definierte und produktive nachträgliche Farbstrukturierung nicht bekannt ist. Beschränkend wirkt weiterhin, daß damit nur eine geringe Konzentration im Glas realisierbar ist.
Als Alternative bietet sich ein nachträglicher Einbau der Metalle in das Glas an.
Mittels Ionen-Implantation lassen sich fast alle Elemente in die Glasoberfläche einbringen. Auch kann dies bereits gezielt in ausgewählten lokalen Bereichen erfolgen; der Einbau verschiedenster Kombinationen von Elementen ist ebenso möglich. Die Eindringtiefen betragen bis zu einigen 100 nm.
Die Ionen-Implantation ist allerdings ein technisch recht aufwendiges Verfahren.

Durch einen Ionenaustausch lassen sich insbesondere Silber- und Kupferionen in alkalihaltige Gläser mit relativ wenig Aufwand einbauen. Dazu wird das Glas einer silber- bzw. kupferhaltigen Salzschmelze ausgesetzt. Infolge dieser Behandlung kommt es zu einem Austausch der Alkaliionen des Glases durch Metallionen der Schmelze. Für eine praktische Anwendung erweist sich der Tieftemperatur-Ionenaustausch in Nitratschmelzen als besonders günstig (Temperaturen im Bereich von ca. 250°C bis 400°C), zumal diese Salze wasserlöslich sind und sich somit leicht vom Glas entfernen lassen.

Prinzipiell lassen sich auch andere Salze einsetzen. Diese schmelzen in der Regel aber bei einer höheren Temperatur.
Die Eindringtiefe der Metallionen in das Glas ist abhängig von der Zeitdauer und der Temperatur des Ionenaustausches. Im Fall des Tieftemperatur-Ionenaustausches in Nitratschmelzen liegen diese in der Größe einiger µm bis einige 100 µm.

Das Einbringen der Metallionen durch Ionenimplantation oder Ionenaustausch stellt - wie dargelegt - gemäß Patentanspruch 1 den ersten Verfahrensschritt dar.

Durch eine anschließende Temperung (Temperaturen im Bereich 400 °C - 650 °C) kommt es zu einer Diffusion der Metallionen auch in das Glasinnere und zu deren Reduktion und Ausscheidung in Form kristalliner Partikel. Bei der Temperung in einer reduzierenden Atmosphäre (z. B. H₂) wird eine sehr dünne Oberflächenschicht (wenige µm), in der sich die Metallpartikel befinden, erzeugt. Erfolgt die Temperung in einer nicht reduzierend wirkenden Atmosphäre (Vakuum eingeschlossen), kann die Reduktion der Metallionen durch im Glas vorhandene, reduzierend wirkende Stoffe erfolgen (Leutermittel). Diese sind insbesondere die in geringfügigen Konzentrationen in technischen Gläsern vorhandenen Substanzen wie Eisen, Cer, Mangan, u. ä.
Die Reduktion der Metallionen beim Tempern ergibt sich aus dem zweiten Verfahrensschritt des Patentanspruches 1. Bei dieser Verfahrensweise wird erst einmal eine recht schmale Größenverteilung der Partikel erreicht.

Durch einen weiteren Temperschritt (Nachtempern) in einer nicht reduzierenden Atmosphäre kommt es zur Umbildung zu noch größeren Partikeln. Es wird auf den dritten Verfahrensschritt des Patentanspruches 1 verwiesen.

Nunmehr wird die Behandlung wiederholt. Es werden wieder Metallionen in das Glas eingebracht (vierter Verfahrensschritt des 1. Patentanspruches) und es kommt zur Bildung neuer, kleiner Partikel (fünfter Verfahrensschritt des Patentanspruches 1), ohne daß die im dritten Verfahrensschritt gebildeten größeren Partikel wesentlich verändert werden.
Bei der nun folgenden Deformation (sechster Verfahrensschritt des Patentanspruches 1) kommt es zu einer Verformung der kugelförmigen zu rotationsellipsoidförmigen Partikeln. Es hat sich gezeigt, daß die Teilchendeformation (beschrieben z. B. durch das entstehende Halbachsenverhältnis der entstehenden ellipsoidförmigen Kolloide) stark von deren Größe abhängt. Größere Partikel werden bei sonst gleichen Deformationsbedingungen stärker verformt als kleine.

Durch die erfindungsgemäße Erzeugung einer breiten Größenverteilung kommt es zu einer breiteren Verteilung der Halbachsenverhältnisse, was wie oben dargelegt, zu einer Verbreiterung der dichroitischen Absorptionsbanden führt.

Die deformierten Partikel sind in ihrer Form bis zu Temperaturen in der Nähe des unteren Kühlpunktes thermisch stabil. Oberhalb dieser Temperatur kommt es zu einer Rückverformung in Richtung Kugelgestalt. Das erfindungsgemäße Verfahren kann somit auch dahingehend abgeändert werden, daß nach dem dritten Verfahrensschritt gemäß Patentanspruch 1 eine Deformation erfolgt und eine zweite Deformation vorgenommen wird, nachdem die kleinen Partikel durch Tempern erzeugt wurden, siehe hierzu Patentanspruch 2.

Erfindungsgemäß wird auf dieser Grundlage durch eine mehrmalige Behandlung eine Größenverteilung der Partikel erzeugt, die deutlich verbreitert ist. Es wird auf Patentanspruch 3 verwiesen.

Bei Temperaturen oberhalb des unleren Kühlpunktes kommt es zu einer Rückverformung der Partikel und somit zur Veränderung der dichroitischen Absorptionsbanden. Dieses Verhalten wird erfindungsgemäß gezielt zur Einstellung spezieller Banden genutzt (lokal unterschiedliche spektrale Maximumslagen in lateral eng begrenzten Bereichen durch entsprechenden lokalen Energieeintrag), siehe hierzu Patentanspruch 4, aber speziell Patentansprüche 12 und 13.
Die durch das erfindungsgemäße Verfahren hergestellten UV-Polarisatoren sind weiterhin dadurch charakterisiert, daß die dichroitische Absorptionswirkung nur in einer dünnen Oberflächenschicht des Glases hervorgerufen wird. Entfernt man diese lokal, (partiell oder vollständig), so lassen sich flächig strukturierte UV-Polarisatoren erzeugen (z. B. durch Verwendung einer Lackmaske, die in einem photolithografischen Prozeß strukturiert wird und anschließender Ätzung von Oberflächenbereichen mittels HF-Säure). Hierzu wird auf Patentanspruch 14 verwiesen.

Nachfolgend soll die Erfindung anhand von 5 Ausführungsbeispielen erläutert werden.

### 1. Ausführungsbeispiel

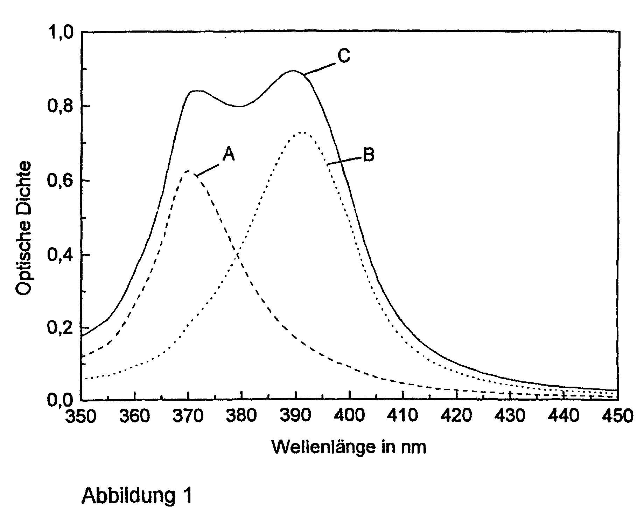

Aus der Figur 1 ist erkennbar, wie durch Bildung und Überlagerung von Banden mit unterschiedlichen Maximumslagen es erfindungsgemäß möglich wird, einen breiten Absorptionsbereich zu erzeugen. Es wird gezeigt, daß aus zwei Absorptionsbanden A und B mit unterschiedlichen Maximumslagen durch Überlagerung der beiden Banden A und B eine erhebliche Verbreiterung des dichroitischen Absorptionsbereiches zur resultierenden Bande C erfolgt.

### 2. Ausführungsbeispiel

Ein Standard-Floatglas wird 30 min bei 350°C in einer AgNO₃ - NaNO₃ Salzschmelze behandelt.
Anschließend erfolgt-eine Temperung von 2h in einer H₂-Atmosphäre bei 600°C sowie eine weitere Temperung von 2h bei 600°C in Luft.

Durch einen nochmaligen Ionenaustausch von 30 min bei 350°C in der AgNO₃ - NaNO₃ Salzschmelze und eine Temperung von 2 h bei einer Temperatur unter 600°C in einer H₂-Atmosphäre werden kleinere Silberpartikel im Glas gebildet.
Das Glas wird dann bei 600° C mit einem Streckverhältnis von 4 unter einer Zugspannung deformiert. Infolge der Deformation entsteht eine Absorptionsbande analog zur Bande C in Abbildung 1.

### 3. Ausführungsbeispiel

Ein Standard-Floatglas wird 30 min bei 350° C in einer AgNO₃ - NaNO₃ Salzschmelze behandelt.

Anschließend erfolgt eine Temperung von 2h in einer H₂-Atmosphäre bei 600°C sowie eine weitere Temperung von 2h bei 600° C in Luft.
Das Glas wird dann bei 600° C mit einem Streckverhältnis von 4 deformiert. Infolge dieser Behandlung entsteht eine Absorptionsbande analog zu Bande A in Abbildung 1.

Durch einen nochmaligen lonenaustausch von 30 min bei 350°C in der AgNO₃ - NaNO₃ Salzschmelze und eine Temperung von 2h bei einer Temperatur unter 525°C in einer H₂-Atmosphäre werden nochmals kugelförmige Silberpartikel im Glas gebildet. Infolge eines zweiten analogen Deformationsprozesses kommt es zur Bildung einer verbreiterten dichroitischen Absorptionsbande, analog zur Bande C in Abbildung 1.

### 4. Ausführungsbeispiel

Ein durch das erfindungsgemäße Verfahren (z.B. Beispiel 2 oder 3 hergestellter UV-Polarisator wird mit einer Fotoresistmaske versehen. Durch einen photolithografischen Prozeß wird die Fotoresistschicht strukturiert. Anschließend erfolgt ein selektives Ätzen von 5 min in 5 % HF-Säure (im Bereich der Lackfenster erfolgt ein Schichtabtrag, während die maskierten Bereiche unverändert bleiben). Nach Entfernung des Fotolackes steht ein strukturierter Polarisator zur Verfügung.

### 5. Ausführungsbeispiel

Ein durch das erfindungsgemäße Verfahren (z.B. Beispiel 2 oder 3 hergestellter UV-Polarisator wird lokal mit einem Energieeintrag (z.B. Elektronenstrahl) beaufschlagt. Der Energieeintrag führt lokal zu einer Erwärmung des Glases, infolge dessen es zu einer Rückverformung der Partikel hin zur Kugelform und zu einer dementsprechenden Verschiebung der Maximumslagen der dichroitischen Banden kommt. Es entstehen strukturiert UV-Polarisatoren mit spektral unterschiedlichen Maximumslagen.

## Patentansprüche

1. Verfahren zur Herstellung von UV-Polarisatoren, bei denen die Polarisation durch dichroitische Absorption erfolgt, **dadurch gekennzeichnet, daß** in einem ersten Verfahrensschritt in die Oberfläche eines Glases Metallionen eingebracht werden, in einem zweiten Verfahrensschritt das Glas getempert wird bis zu einer Reduktion und Ausscheidung der Metallionen in der Oberfläche des Glases in Form kristalliner Partikel, in einem dritten Verfahrensschritt eine Nachtemperung in einer nichtreduzierenden Atmosphäre erfolgt zur Umbildung der im zweiten Verfahrensschritt erzeugten Partikel zu größeren Partikeln, in einem vierten Verfahrensschritt Metallionen in das Glas analog dem ersten Verfahrensschritt eingebracht werden, in einem fünften Verfahrensschritt das Glas erneut getempert wird, wobei sich die im vierten Verfahrensschritt eingebrachten Metallionen in der Oberfläche des Glases in Form kristalliner Partikel kleinerer Größe als die im dritten Verfahrensschritt erzeugten Partikel ausscheiden und in einem sechsten Verfahrensschritt eine Deformation des Glases bei Temperaturen nahe der Glasübergangstemperatur derart vorgenommen wird, daß die Partikel unterschiedlicher Größe zu rotationsellipsoidförmigen Partikeln mit unterschiedlichem Halbachsenverhältnissen umgeformt werden.

2. Verfahren nach Anspruch 1, **dadurch gekennzeichnet, daß** die Verfahrensschritte eins bis drei entsprechend dem Patentanspruch 1 durchgeführt werden und in einem anschließenden Verfahrensschritt eine Deformation des Glases entsprechend dem sechsten Verfahrensschritt des Anspruches 1 erfolgt, indem die großen Metallpartikel zu rotationsellipsoidförmigen Partikeln umgeformt werden, und daß anschließend die Verfahrensschritte vier, fünf und sechs gemäß Anspruch 1 durchgeführt werden.

3. Verfahren nach Anspruch 1, **dadurch gekennzeichnet, daß** die Verfahrensschritte eins bis fünf gemäß dem Anspruch 1 mehrfach wiederholt werden, bis sich eine definierte breite Größenverteilung der Partikel ergibt, und daß sich nach mehrfacher Behandlung der Verfahrensschritt sechs gemäß Anspruch 1 anschließt.

4. Verfahren nach Anspruch 1, 2 oder 3, **dadurch gekennzeichnet, daß** nach Abschluß aller Verfahrensschritte nach Anspruch 1, 2 oder 3 durch Temperung des Glases bei einer Temperatur oberhalb eines vorgegebenen unteren Kühlpunktes eine definierte begrenzte Rückverformung der rotationsellipsoidförmigen Partikel erfolgt.

5. Verfahren nach Anspruch 1, 2 oder 3, **dadurch gekennzeichnet, daß** in das Glas Silber-, Gold-, Kupfer-, und/oder Aluminiumionen oder Mischungen davon eingebracht werden.

6. Verfahren nach Anspruch 1, **dadurch gekennzeichnet, daß** bei dem zweiten Verfahrensschritt gemäß Anspruch 1 die Reduktion in einer reduzierenden Atmosphäre erfolgt.

7. Verfahren nach Anspruch 1 oder 6 **dadurch gekennzeichnet, daß** die Reduktion in einer Wasserstoff- oder Wasserstoff-/Stickstoffatmosphäre erfolgt.

8. Verfahren nach Anspruch 1, **dadurch gekennzeichnet, daß** bei dem zweiten Verfahrensschritt gemäß Anspruch 1 die Reduktion in einer nicht reduzierend wirkenden Atmosphäre vorgenommen wird und die Reduktion der Metallionen durch im Glas vorhandene, reduzierend wirkende Stoffe erfolgt.

9. Verfahren nach Anspruch 1 oder 2, **dadurch gekennzeichnet, daß** der dritte Verfahrensschritt gemäß Anspruch 1 oder 2 bei einer Temperatur zwischen 300 °C und 700 °C erfolgt.

10. Verfahren nach Anspruch 1, 2 oder 3, **dadurch gekennzeichnet, daß** das Glas derartig gedehnt wird, daß es auf das 2- bis 30-fache der ursprünglichen Länge verstreckt wird.

11. Verfahren nach Anspruch 1, 2, 3 oder 10, **dadurch gekennzeichnet, daß** die kontinuierliche Deformation unter Verwendung einer schmalen Heizzone erfolgt und das Glas nach dem Verstrecken so schnell abgekühlt wird, daß eine Rückverformung der rotationsellipsoidförmigen Partikel verhindert wird.

12. Verfahren nach Anspruch 1 bis 3, **dadurch gekennzeichnet, daß** durch einen lokalen Energieeintrag in räumlich eng begrenzten Bereichen der Glasoberfläche eine definierte Rückverformung der rotationsellipsoidförmigen Partikel erfolgt.

13. Verfahren nach Anspruch 1 bis 3 oder 12, **dadurch gekennzeichnet, daß** der Energieeintrag mittels Laser und/oder Elektronenstrahl erfolgt.

14. Verfahren nach Anspruch 1 bis 3, **dadurch gekennzeichnet, daß** ein Maskieren und Abätzen dünner Schichten der Oberfläche des Glases erfolgt.

15. Verfahren nach Anspruch 1 bis 3, 12, 13 oder 14 **dadurch gekennzeichnet, daß** zur Herstellung strukturierter Polarisatoren ein lokaler Energieeintrag und/oder Maskieren und Abätzen erfolgt.

## Claims

1. Method for the manufacture of UV polarizers, in which polarization is effected by dicroitic absorption, **characterized in that** in a first process step metal ions are introduced into the surface of a glass, in a second process step the glass is heated up until the metal ions in the surface of the glass undergo a reduction and precipitate in form of crystalline particles, in a third process step re-heating takes place in a non-reducing atmosphere in order to reform particles created in the second process step into particles of a greater size, in a fourth process step metal ions are introduced into the glass similar to the first process step, in a fifth process step the glass is heated up again which makes the metal ions introduced during the fourth process step precipitating in the surface of the glass in form of crystalline particles, but of smaller sizes than those created in the third process step, and in a sixth process step a deformation of the glass at a temperature close to the glass transition point is done in such a way that particles of different sizes reform into particles of revolution-ellipsoidal shape with different semiaxes ratios.

2. Method according to claim 1, **characterized in that** process steps one to three are carried through as described under patent claim 1, and in a subsequent process step a deformation of the glass is effected as described in the sixth process step of claim 1, causing the large metal particles to be reformed into particles of revolution-ellipsoidal shape, whereafter process steps four, fife and six are carried through as described under claim 1.

3. Method according to claim 1, **characterized in that** process steps one to five are repeated several times until a definite broad particle size distribution is reached, and where after such repeated treatment process step six follows as described under claim 1.

4. Method according to claim 1, 2 or 3, **characterized in that** after all process steps are finished as described under claim 1, 2 or 3 the glass is heated up to a temperature above a pre-defined lower cooling point to cause the particles of revolution-ellipsoidal shape to undergo a limited definite backward reformation.

5. Method according to claim 1, 2 or 3, **characterized in that** silver, gold, copper and/or aluminum ions, or mixtures of same, are introduced into the glass.

6. Method according to claim 1, **characterized in that** the reduction as described in the second process step under claim 1 is carried through in a reducing atmosphere.

7. Method according to claim 1 or 6, **characterized in that** the reduction is carried through in a hydrogen or a hydrogen-nitrogen atmosphere.

8. Method according to claim 1, **characterized in that** the reduction as described in the second process step under claim 1 is carried through in an atmosphere that has no reducing effect, whereat the reduction of the metal ions is effected by reducing agents incorporated in the glass.

9. Method according to claim 1 or 2, **characterized in that** the third process step as described under claim 1 or 2 is carried through at a temperature between 300°C and 700°C.

10. Method according to claim 1, 2 or 3, **characterized in that** the glass is drawn to such an extent to cause an elongation that is two times up to thirty times its original length.

11. Method according to claim 1, 2, 3 or 10, **characterized in that** the continuous deformation is carried through by heating only a narrow zone of glass, and cooling down the same after drawing so fast that the particles of revolution-ellipsoidal shape are prevented from undergoing any backward reformation.

12. Method according to claim 1 to 3, **characterized in that** the particles of revolution-ellipsoidal shape undergo a discrete backward reformation caused by a local energy input into small regions of the glass surface.

13. Method according to claim 1, 2, 3 or 12, **characterized in that** such energy input is made by LASER or electron-beam.

14. Method according to claim 1, 2, 3, **characterized in that** the glass surface is masked whereafter thin layers in the glass surface are etched away.

15. Method according to claim 1, 2, 3, 12, 13 or 14, **characterized in that** a local energy input and/or masking and etching are used to manufacture structured polarizers.

## Revendications

1. Procédé de fabrication'de polariseurs aux ultraviolets, par lequel la polarisation se fait par absorption dichroïque, **caractérisé par le fait que** durant une première étape du procédé des ions métalliques sont introduits dans la surface d'un verre, que durant la deuxième étape du procédé le verre est attrempé jusqu'à une réduction et jusqu'à la précipitation d'ions métalliques à la surface du verre sous forme de particules cristallines, que dans une troisième étape du procédé un attrempage successif a lieu dans une atmosphère non réductrice pour que les particules obtenues lors de la deuxième étape du procédé se transforment en particules encore plus grosses, que dans une quatrième étape du procédé des ions métalliques sont introduits dans le verre de manière analogue à la première étape du procédé, que dans une cinquième étape du procédé le verre est de nouveau attrempé, les ions métalliques introduits à la surface du verre se précipitant sous forme de particules cristallines de plus petite taille que les particules produites dans la troisième étape du procédé et que dans une sixième étape du procédé par des températures voisines de la température de transition vitreuse une déformation du verre soit effectuée de telle manière que les particules de tailles différentes soient transformées en particules de forme ellipsoïde de révolution avec des rapports semi-axiaux différents.

2. Procédé selon la revendication 1 **caractérisé par le fait que** les étapes de procédé de un à trois sont effectuées conformément à la revendication 1 et que dans une étape de procédé suivante une déformation du verre a lieu conformément à la sixième étape de procédé selon la revendication 1, au cours de laquelle les grosses particules de métal sont transformées en particules de forme ellipsoïde, et que suite à cela les étapes de procédé quatre, cinq et six sont effectuées selon la revendication 1.

3. Procédé selon la revendication 1 **caractérisé par le fait que** les étapes de procédé de un à cinq sont effectuées plusieurs fois conformément à la revendication 1, jusqu'à obtenir une large répartition définie des grosseurs des particules, et qu'après le traitement répété la sixième étape selon la revendication 1 se fera.

4. Procédé selon la revendication 1, 2 ou 3 **caractérisé par le fait qu'**une fois toutes les étapes de procédé terminées selon la revendication 1, 2 ou 3, en attrempant le verre par une température supérieure au point de refroidissement inférieur indiqué, une retrodéformation des particules de forme ellipsoïde de révolution limitée définie se produit.

5. Procédé selon la revendication 1, 2 ou 3 **caractérisé par le fait que** l'on introduit dans le verre des ions d'argent, d'or, de cuivre et /ou d'aluminum ou des mélanges de ceux-ci.

6. Procédé selon la revendication 1 **caractérisé par le fait que** lors de la deuxième étape de procédé selon la revendication 1 la réduction se fait dans une atmosphère réductrice.

7. Procédé selon la revendication 1 ou 6 **caractérisé par le fait que** la réduction a lieu dans une atmosphère d'hydrogène ou d'hydrogène et d'azote.

8. Procédé selon la revendication 1 **caractérisé par le fait que** lors de la deuxième étape de procédé selon la revendication 1 la réduction est effectuée dans une atmosphère qui n'est pas à action réductrice et que la réduction des ions de métaux se fait par les matériaux à action réductrice qui se trouvent dans le verre.

9. Procédé selon la revendication 1 ou 2 **caractérisé par le fait que** la troisième étape du procédé selon la revendication 1 ou 2 a lieu sous une température située entre 300 °C et 700 °C.

10. Procédé selon la revendication 1, 2 ou 3 **caractérisé par le fait que** le verre est étiré de telle manière que le verre subit une élongation de 2 à 30 fois la longueur initiale.

11. Procédé selon la revendication 1, 2, 3 ou 10 **caractérisé par le fait que** la déformation continuelle a lieu en utilisant une étroite zone de chauffage et que le verre après l'étirage est refroidi de manière si rapide qu'une rétroformation des particules de forme ellipsoïde de révolution est empêchée.

12. Procédé selon les revendications de 1 à 3 **caractérisé par le fait qu'**en ajoutant un supplément d'énergie localement dans des domaines étroitement limités de la surface du verre une rétroformation définie des particules de forme ellipsoïde de révolution de produit.

13. Procédé selon les revendications de 1 à 3 ou 12 **caractérisé par le fait que** l'apport en énergie se fait au moyen d'un rayon laser et/ ou d'un rayon électronique.

14. Procédé selon les revendications de 1 à 3 **caractérisé par le fait qu'**a lieu un masquage et une corrosion de faibles couches de la surface du verre.

15. Procédé selon les revendications de 1 à 3, 12, 13 ou 14 **caractérisé par le fait que** pour produire des polariseurs structurés, un apport local d'énergie et/ ou un masquage et une corrosion sont effectués.
